# EUROPÄISCHE PATENTANMELDUNG

(11) **EP 4 513 105 A1**
(43) Veröffentlichungstag der Anmeldung: **26.02.2025**
(21) Anmeldenummer: 23192615.5
(22) Anmeldetag: 22.08.2023
(51) Int. Cl.: F24S 25/16, F24S 25/15

(54) **MONTAGEVORRICHTUNG**

(71) Anmelder: AEROCOMPACT Group Holding AG, 1010 Wien (AT)
(72) Erfinder: Burger, Markus M., 6791 St. Gallenkirch (AT)
(74) Vertreter: Patent- und Rechtsanwälte Behrmann Wagner PartG mbB

(57) **Zusammenfassung**

Die Erfindung betrifft eine Montagevorrichtung (1), insbesondere Flachdach- oder Freiflächenmontagesystem, für Flächenelemente, bevorzugt Photovoltaik- oder Solarthermiemodule, mit einem Bodenkontaktelement (2), welches bevorzugt auch zur Aufnahme von Ballastgewichten dient und einem mit dem Bodenkontaktelement (2) verbindbaren Befestigungsbügel (3) der an einem vom Bodenkontaktelement (2) abgewandten Ende Befestigungsmittel (4), insbesondere Klammern, zur Befestigung der Flächenelemente (16) umfasst oder aufnehmen kann wobei vorgesehen ist, dass die Verbindung zwischen dem Bodenkontaktelement (2) und dem Befestigungsbügel (3), lösbar ausgebildet ist.

## Beschreibung

Die vorliegende Erfindung betrifft eine Montagevorrichtung, insbesondere ein Flachdach- oder Freiflächenmontagesystem, für Flächenelemente, bevorzugt Photovoltaik- oder Solarthermiemodule.

Montagevorrichtungen für Photovoltaikmodule oder Solarthermiemodule auf Flachdächern oder Freiflächen sind grundsätzlich aus dem Stand der Technik bekannt. Die Montagevorrichtungen umfassen hierbei in der Regel wenigstens eine Montagebasis, zur bodenseitigen Anordnung oder Befestigung an einer Dachkonstruktion, und ein Klammer- oder Klemmelement zur Sicherung der Auflageelemente oder Flächenelemente, insbesondere der Photovoltaik- oder Solarthermiemodule. Die Klammerelemente können zum Beispiel an einem oberen Rand der Montagebasis befestigt, bevorzugt verschraubt sein.

Die Montagebasis wird zum Beispiel wannenförmig ausgebildet, um bei einer bodenseitigen Anordnung große Volumen von Ballastmitteln, wie etwa Ballaststeine oder Schüttgut, aufnehmen zu können, wodurch die Wanne beschwert und eine stabile Positionierung der Montagevorrichtung auf einer ebenen Freifläche ermöglicht wird. Die Wanne kann weiterführend stufenförmig ausgebildet sein, um zwei unterschiedliche Niveaus des oberen Rands der Montagebasis zu erhalten, so dass bei der Verbindung von Flächenelementen über zwei benachbarte, gleich ausgerichtete Montagebasen eine abgeschrägte Ausrichtung der Flächenelemente, durch alternierende Anordnung auf der höheren oder niedrigeren Stufe des Rands der Montagebasis, ermöglicht wird, wie zum Beispiel in der US 9 831 817 B2, US 9 057 544 B2 und der US 11 689 148 B2 gezeigt wird.

Aus der WO 2023/133511 A2 ist eine Montagevorrichtung mit schlittenförmig ausgebildeter Montagebasis bekannt, wobei die Seiten des Schlittens auch hier stufenförmig ausgebildet sind.

Alle gattungsgemäßen Ausführungen weisen dabei den Nachteil auf, dass durch die Ausbildung der Stufen an der jeweiligen Montagebasis auch die Anordnungsmöglichkeiten der Flächenelemente durch diese vorgegebenen Stufen der Montagebasis beschränkt sind und eine Anpassung, insbesondere während der Montage, nicht oder nur schwer möglich ist. Auch die thermische Ausdehnung von den beteiligten Komponenten führt dazu, dass die Montagebasen bei Erwärmung und Abkühlung eine Raupenbewegung gegenüber dem Untergrund ausführen. Die asymmetrische Ausbildung dieser Montagebasen erschwert dabei auch die flexible Verwendung für unterschiedliche Montagesituationen. So ist beispielsweise nur eine Anordnung von Flächenelementen mit einer gleichbleibenden bzw. konstanten Neigung möglich. Dies kann beispielsweise bei Südausrichtungen von Montageelementen gewünscht sein. Bei einer Ost-West-Ausrichtung kann jedoch eine alternierende Neigung vorteilhafter sein, um sowohl die Vormittagssonne als auch die Nachmittagssonne besonders effektiv nutzen zu können. Diese alternierende Neigung der Flächenelemente kann mit den bekannten, asymmetrischen Ballastwannen nicht erreicht werden.

Auch darüber hinaus sind die bekannten Montagebasen nur dazu geeignet, um genau eine Anordnung der Flächenelemente zu ermöglichen. Eine flexible Nutzung, die an verschiedenste Montagesituationen anpassbar ist, ist nicht realisierbar.

Die Klammer- oder Klemmelemente weisen in der Regel einen teilweise flachen Auflagebereich für die Anlage an einem Auflageelement auf und werden in die Montagebasis an definierten Stellen eingeschraubt.

Üblicherweise werden die Befestigungselemente entlang der senkrechten Richtung in oder an der Montagevorrichtung befestigt und von der gegenüberliegenden Seite verschraubt oder von der Seite ihrer Anlage her mit einer gegenüberliegenden Mutter verschraubt. Hierdurch wird der Montageaufwand derartiger Montagevorrichtungen maßgeblich erhöht, besonders wenn die Schraube oder Mutter unter einem überstehenden Rand versenkt werden und insbesondere nachdem die Montagebasis durch Einfüllen von Ballast in ihrer Position fixiert wurde, können Anpassungen nur noch schwer vorgenommen werden.

Weiterhin sind Montagevorrichtungen bekannt, welche vormontiert, bereitgestellt werden. Hierbei ergeben sich einerseits Nachteile für den Transport, da Montagevorrichtungen sehr viel Platz oder Volumen beanspruchen. Andererseits sind solche Vorrichtungen auch sehr eingeschränkt in ihrer Anpassbarkeit, wodurch sie nur begrenzt Anwendungsmöglichkeiten finden. Zudem besteht das Problem, dass diese Montagevorrichtungen nicht steif genug sind, so dass trotz des eingesetzten Ballasts eine sichere Einleitung von Kräften ohne ungewollte plastische Verformung nicht gewährleistet werden kann. Außerdem beansprucht die Vormontage viel Zeit und verursacht einen hohen Aufwand.

Vor diesem Hintergrund liegt die Aufgabe der vorliegenden Erfindung darin, die Nachteile im Stand der Technik zu überwinden, insbesondere eine Montagevorrichtung vorzuschlagen die flexibel anpassbar ist und verbesserte mechanische Eigenschaften aufweist und leicht zu montieren ist.

Diese Aufgabe wird mit einer Montagevorrichtung mit den Merkmalen des Anspruchs 1 gelöst. Weiterhin wird die Aufgabe durch ein Montagesystem mit den Merkmalen des Anspruchs 15 gelöst.

Vorteilhafte Ausführungsformen der erfindungsgemäßen Montagevorrichtung und des Montagesystems sind Gegenstand der nachfolgenden Beschreibung und Figurenbeschreibung sowie der Unteransprüche.

Die vorrichtungsmäßig beschriebenen und beanspruchten Merkmale sollen auch als entsprechend verfahrensmäßig offenbart und beanspruchbar gelten, und umgekehrt.

Die Montagevorrichtung sieht, wie bereits oben erwähnt, eine Anwendung als insbesondere Flachdach- oder Freiflächenmontagesystem, für Flächenelemente, bevorzugt Photovoltaik- oder Solarthermiemodule, vor.

Dabei umfasst die Montagevorrichtung ein Bodenkontaktelement, welches bevorzugt auch zur Aufnahme von Ballastgewichten dient. Das Bodenkontaktelement kommt direkt mit dem Untergrund oder Boden in Kontakt, zum Beispiel auf oder mit einer Unterseite des Bodenkontaktelements.

Weiterhin umfasst die Montagevorrichtung einen mit dem Bodenkontaktelement lösbar verbindbaren Befestigungsbügel der an einem vom Bodenkontaktelement abgewandten Ende Befestigungsmittel, insbesondere Klammern, zur Befestigung der Flächenelemente umfasst oder aufnehmen kann.

Als Bodenkontaktelement wird das Element der Montagevorrichtung verstanden, welches mit dem Boden oder einer, insbesondere flachen, Dachkonstruktion in Verbindung steht. Das Bodenkontaktelement liegt dabei wenigstens teilweise flächig an den Boden oder die Dachkonstruktion an. Das Bodenkontaktelement kann aus verschiedenen, bevorzugt witterungsbeständigen, Materialien oder Materialkombinationen bestehen, wobei zum Beispiel Kunststoff oder Metall denkbar sind. Kunststoff bietet sich besonders für eine Anwendung im Rahmen eines begrünten Dachs an. Besonders vorteilhaft weist das Bodenkontaktelement keine scharfen Ecken oder Kanten auf, um Folienmaterialien der Dachkonstruktion nicht zu beschädigen.

Als Ballast kann zum Beispiel Schüttgut oder Kies vorgesehen werden, wobei auch großstückige Beschwerung mit z. B. Ziegelbruch, Natursteinen Beton- oder Zementblöcken oder Sandsäcken möglich ist.

Der Befestigungsbügel kann verschiedene Ausführungsformen aufweisen, welche zum Beispiel je nach Terrainneigung und/oder Beschaffenheit und/oder Montagesituation andersartig ausgebildet sein können. Grundsätzlich ermöglicht der Befestigungsbügel eine stabile Auflage der Flächenelemente, welche auch bei witterungsbedingten Einflüssen, wie zum Beispiel starke Winde oder Temperatursteigerung oder -abfall gewährleistet wird. Die Befestigungsbügel stellen den Wesentlichen Abstand in Höhenrichtung (vertikal) zwischen einem oberen Rand des Bodenkontaktelements und den Flächenelementen her, die an dem vom Bodenkontaktelement abgewandten Ende mittelbar oder unmittelbar befestigt werden. Durch die lösbare Verbindung zwischen Bodenkontaktelement und Befestigungsbügel können besondere Vorteile erreicht werden. Zunächst können unterschiedliche Befestigungsbügel mit einem, bevorzugten standardisierten, Bodenkontaktelement verbunden werden. Dies ermöglicht eine flexible Anpassung an die jeweilige Montagesituation, bei einem gleichzeitigen Höchstmaß an Gleichteilen. Außerdem ermöglicht die lösbare Verbindung zwischen Bodenkontaktelement und Befestigungsbügel eine Versteifung der Montagevorrichtung in Bereichen, in denen Steifigkeit gewünscht ist und eine mechanische Elastizität, in Bereichen in denen diese vorteilhaft ist.

So kann die Verbindung zwischen Bodenkontaktelement und Befestigungsbügel im Bereich der Verbindung die beiden Bestandteile zusätzlich wechselseitig versteifen. Darüber hinaus sind die Befestigungsbügel jedoch, je nach Ausgestaltung, abseits oder jenseits der Verbindung mit dem Bodenkontaktelement flexibel oder teilelastisch, so dass Kräfte besonders gut aufgenommen und abgeleitet werden können. Die vorgenannten Vorteile ermöglichen zusammen auch in besonders vorteilhafter Weise die Realisierung von Fest- und Loslagern der Flächenelemente durch die geeignete Wahl der jeweiligen Befestigungsbügel in einer Abfolge von Montagevorrichtungen.

Die vorliegende Erfindung hat zudem erkannt, dass durch die lösbare Verbindung von Bodenkontaktelement und Befestigungsbügel Transport und Lagerung der Bestandteile der Montagevorrichtung erleichtert wird, und gleichzeitig eine schnelle und einfache Montage, Demontage und Anpassung der Montagevorrichtung möglich wird.

Denn durch die lösbar ausgeführte Verbindung kann die Montagevorrichtung zerlegt in ihre Einzelteile zum Montageort gebracht werden, wodurch eine besonders platzsparende und sichere Verpackung und ein volumen- oder platzsparender Versand gewährleistet werden kann. Ebenso können verschieden ausgeführte Elemente der Montagevorrichtungen kombiniert werden um eine optimale Anpassung an den vorliegenden Untergrund und das geplante Montagevorhaben zu gewährleisten. Die Verbindung von unterschiedlichen Befestigungsbügeln mit einem standardisierten oder einheitlichen Bodenkontaktelement ermöglicht zudem unterschiedliche Anordnungsmuster (Auf-Ab-Auf für zum Beispiel Ost-West-Anordnungen oder Sägezahn für Süd-Anordnungen) und Neigungen der Flächenelemente.

Das Bodenkontaktelement kann dann durch Ballast bereits an einem definierten Platzt wenigstens teilweise fixiert werden, wodurch ein Verschieben des Bodenkontaktelements während der folgenden Montageschritte verhindert wird und dementsprechend eine aufwändige Wiederherstellung ursprünglich ausgemessener Positionen vermieden wird. Die Befestigungsbügel können im Folgenden mit dem Bodenkontaktelement verbunden werden, wobei durch eine werkzeuglose Ausführung besonders bei der Installation einer Vielzahl von Montagevorrichtungen Zeit und Aufwand eingespart werden kann, da der einzelne Montageprozess beschleunigt wird und zum Beispiel an mehreren Montagevorrichtungen gleichzeitig gearbeitet werden kann, ohne durch Verfügbarkeit von Werkzeugen limitiert zu sein.

Gemäß einer ersten vorteilhaften Ausführungsform kann vorgesehen sein, dass die Verbindung zwischen dem Bodenkontaktelement und dem Befestigungsbügel, bevorzugt werkzeuglos, lösbar und werkzeuglos herstellbar ausgebildet ist.

Die Anlage der Flächenelemente am Befestigungsbügel kann bevorzugt werkzeuglos durch Befestigungselemente, insbesondere Klammern, hergestellt und gelöst werden, wobei andere Ausführungsformen, sowohl werkzeuglos als auch werkzeugabhängig, wie zum Beispiel Schraubverbindungen oder Steckverbindungen, möglich sind. Die Befestigungselemente können rein optional Beschichtungen, zum Beispiel Gummierungen oder Lackierungen, aufweisen.

Durch die werkzeuglose Ausführung der Verbindung besonders bei der Installation einer Vielzahl von Montagevorrichtungen kann besonders viel Zeit und Aufwand eingespart werden, da der einzelne Montageprozess beschleunigt wird und zum Beispiel an mehreren Montagevorrichtungen gleichzeitig gearbeitet werden kann, ohne durch Verfügbarkeit von Werkzeugen limitiert zu sein.

Weiterhin kann vorteilhaft vorgesehen sein, dass die Verbindung zwischen dem Bodenkontaktelement und den Befestigungsbügeln als Steckverbindung ausgebildet ist.

Hierdurch kann besonders vorteilhaft eine einfache Montage ermöglicht werden, wobei trotzdem ein Bestehen der Verbindung gewährleistet wird. Weiterhin kann die Steckverbindung bevorzugt wenigstens teilweise flächig ausgebildet sein, wodurch die Verbindung durch Oberflächenhaftung verstärkt wird. Weiter bevorzugt kann die Steckverbindung wenigstens teilweise Führungshilfen aufweisen, um die Montage insbesondere am Boden zu erleichtern.

Gemäß einer weiteren vorteilhaften Ausführungsform kann vorgesehen sein, dass die Steckverbindung so ausgeführt ist, dass eine Einsteckrichtung im Wesentlichen parallel zu einer Grundebene, bevorzugt parallel zu einer Längsrichtung, des Bodenkontaktelements verläuft.

Hierdurch wird einerseits die Montage der Befestigungsbügel an dem Bodenkontaktelement besonders einfach und andererseits wird die Verbindung durch das Einstecken entlang der Längsrichtung besonders stabil, da insbesondere ein Kippen oder Wackeln eines eingesteckten Befestigungsbügels, wie es bei einem senkrechten Einstecken durch Fertigungsungenauigkeiten oder Materialabnutzug häufig ist, vermieden wird.

Gemäß einer weiteren vorteilhaften Ausführungsform kann vorgesehen sein, dass das Bodenkontaktelement als Strukturplatte ausgebildet ist, bevorzugt mit wenigstens einem sich entlang einer Längsrichtung erstreckenden Versteifungsprofil.

Durch die flächige, als Strukturplatte, ausgebildete Form hat das Bodenkontaktelement eine besonders stabile Anlage an den jeweiligen Untergrund und gleichzeitig die notwendige Verwindungssteifigkeit. Durch die Steifigkeit des Bodenkontaktelements kann besonders vorteilhaft die Steifigkeit des Befestigungsbügels im Bereich der Verbindung verbessert werden, besonders bevorzugt quer zur Erstreckung des oder der Versteifungsprofile. Besonders vorteilhaft sind alle Versteifungsprofile des Bodenkontaktelements in Längsrichtung ausgerichtet. Auch wenn dadurch die Steifigkeit des Bodenkontaktelements quer zu den Versteifungsprofilen gering ausfällt, kann abermals die Verbindung mit dem Befestigungsbügel die Steifigkeit der Verbindung aus Bodenkontaktelement und Befestigungsbügel besonders vorteilhaft aussteifen.

Die Ausführung als Strukturplatte ermöglicht zudem eine besonders vorteilhafte und platzsparende Stapelung der Bodenkontaktelemente.

Vorteilhaft stellt bereits die Oberflächenhaftung des Bodenkontaktelements eine ausreichende Stabilisierung der Anlage bereit, wodurch verhältnismäßig wenig Ballast ausreicht um die Montagevorrichtung zu sichern. Ebenso kann durch die Ausführung als Strukturplatte auch bei einem Untergrund mit Neigung eine feste Anlage erreicht werden ohne, dass eine Kippgefahr besteht. Weiterhin reicht die Montagevorrichtung durch eine bevorzugt längliche Ausführung der Strukturplatte relativ weit unter die Flächenelemente, wodurch besonders bei einer Anordnung der Flächenelemente entlang ihrer Längsrichtung, der sogenannten Befestigung an der Längskante, eine möglichst weitreichende Stabilisierung erreicht wird, welche die Flächenelemente insbesondere gegen ein Durchhängen, Durchbiegen oder Absacken schützt, wodurch die Materialermüdung der Flächenelemente gesenkt wird, eine längere Lebensdauer der Flächenelemente begünstigt wird und Windlasten besser aufgenommen werden können. Dadurch kann eine echte ¼-Klemmung erreicht werden, bei der an beiden Enden der Längskante der Flächenelemente eine Befestigung auf ¼ der Länge der Längskante erfolgt. Durch wenigstens ein Versteifungsprofil wird dabei ein Verformen des Bodenkontaktelements, zum Beispiel durch witterungsbedingte Temperatur oder Feuchtigkeitseinflüsse, verhindert. Das Bodenkontaktelement kann auch durch die Beschwerung mit Ballast weiter versteift werden.

Gemäß einer weiteren vorteilhaften Ausführungsform kann vorgesehen sein, dass Bodenkontaktelement an zwei in Längsrichtung gegenüberliegenden Enden einen Aufnahmeschlitz zur Aufnahme der Befestigungsbügel aufweist.

Bevorzugt ist der Aufnahmeschlitz an wenigstens einem Versteifungsprofil angeordnet, besonders bevorzugt sich über mehrere Versteifungsprofile als durchgängige Aussparung erstreckend angeordnet. Hierdurch können Befestigungsbügel entlang der Längsausrichtung aus zwei gegenüberliegenden Richtungen an das Bodenkontaktelement angesteckt werden, wodurch sich bei einem annähernd entlang der Längsrichtung eintretenden Krafteintrag, zum Beispiel durch starke Winde, der Vorteil ergibt, dass nur Befestigungsbügel an einer Seite entgegen ihrer Aufsteckrichtung kraftbeaufschlagt werden, wobei ein Lösen dieser Befestigungsbügel durch gegengeordnete Befestigungsbügel, welche an einem gemeinsamen Flächenelement angeordnet sind, verhindert wird.

Gemäß einer weiteren vorteilhaften Ausführungsform kann vorgesehen sein, dass sich der Aufnahmeschlitz über zwei, bevorzugt drei, Versteifungsprofile erstreckt.

Hierdurch können besonders vorteilhaft mehrere Befestigungsbügel, sowie Befestigungsbügel verschiedener Ausführungsformen an dem Bodenkontaktelement angeordnet, insbesondere aufgesteckt, werden. Weiterhin wird die Verbindungen durch die potentiell größere Anlagefläche entlang einer horizontalen Richtung zwischen Bodenkontaktelement und Befestigungsbügel besonders stabil, insbesondere, wenn durch das Gewicht von aufliegenden Flächenelementen senkrecht Druck auf die Verbindung ausgeübt wird. Besonders vorteilhaft wird dadurch auch eine zusätzliche Aussteifung der Befestigungsbügel im Bereich der Verbindung mit dem Bodenkontaktelement erreicht. Außerdem können die eingesteckten Befestigungsbügel weiter zur Versteifung und Stabilisierung des Bodenkontaktelements, bevorzugt senkrecht zu dem oder den Versteifungsprofil(en), beitragen.

Gemäß einer weiteren vorteilhaften Ausführungsform kann vorgesehen sein, dass das Bodenkontaktelement, insbesondere im Bereich der Versteifungsprofile, eine in den Montageschlitz ragende Sicherungszunge aufweist, die beim Verbinden, insbesondere Aufstecken eines Befestigungsbügels passierbar ist und bei oder unmittelbar vor dem Erreichen der Endposition eines Befestigungsbügels selbsttätig in eine Sicherungsposition überführbar ist.

Bevorzugt ist die Sicherungszunge beim Aufstecken eines Befestigungsbügels zeitweise verformbar, wodurch der Befestigungsbügel bis zu einer Endposition geschoben werden kann bevor die Sicherungszunge, durch wenigstens annähernde Rückkehr in ihre Ausgangsposition, ihre Sicherungsposition einnimmt. Weiter bevorzugt ist an dem Befestigungsbügel eine Aussparung gegengeordnet, welche derart positioniert ist, dass bei einem Erreichen einer definierten Endposition die Sicherungszunge in die Aussparung des Befestigungsbügels einschnappt. Durch die Sicherungszunge wird ein Verschieben des Befestigungsbügels verhindert und zusätzlich wird durch das Einschnappen der Sicherungszunge ein akustisches Signal erzeugt, welches das Erreichen der Endposition kommuniziert.

Die Sicherungszunge kann vorteilhaft einstückig, bevorzugt monolithisch von dem Bodenkontaktelement ausgebildet oder umfasst sein. Zum Beispiel kann die Sicherungszunge als Stanzkontur ausgebildet sein.

Gemäß einer weiteren vorteilhaften Ausführungsform kann vorgesehen sein, dass der Befestigungsbügel an einem mit dem Bodenkontaktplatte verbundenen oder verbindbaren Ende eine ein Versteifungsprofil wenigstens abschnittweise umgreifende Lasche aufweist.

Hierdurch kann ein Befestigungsbügel besonders vorteilhaft mit dem Bodenkontaktelement verbunden werden, wobei der Befestigungsbügel gegen ein Verrutschen oder Verdrehen gesichert wird, ohne dass der Kraftaufwand zum Aufstecken des Befestigungsbügels erhöht wird. Weiterhin dient die Lasche als Orientierungshilfe, um den Befestigungsbügel an der Bodenkontaktplatte an vorteilhaften Position anzustecken.

Gemäß einer weiteren vorteilhaften Ausführungsform kann vorgesehen sein, dass der Befestigungsbügel einen Befestigungsabschnitt zum Eingriff in das Bodenkontaktelement, und insbesondere zum Umgreifen eines Versteifungsprofils, und einen an den Befestigungsabschnitt angrenzenden, bevorzugt monolithisch mit diesem verbundenen Abstandsabschnitt aufweist, wobei der Abstandsabschnitt aus einem wenigstens teilweise elastisch verformbaren Material, bevorzugt Aluminium, gefertigt ist. Der Abstandsabschnitt sorgt im Wesentlichen für den Abstand zwischen Bodenkontaktelement und dem montierten Flächenelement. Der Abstandsabschnitt kann beispielweise bei allen Befestigungsbügeln so ausgestaltet sein, dass wenigstens 100mm Abstand zwischen der Oberkante des Bodenkontaktelements und der Unterkante des Flächenelements gewährleistet werden, wenn das Bodenkontaktelement überirdisch verlegt wird und nicht in das Substrat eines begrünten Dachs integriert oder eingegraben wird.

Vorteilhaft kann der Befestigungsabschnitt aus dem gleichen Material gefertigt sein, wie der Abstandsabschnitt. Durch die Verbindung mit dem Bodenkontaktelement kann der Befestigungsbügel in einem bodenseitigen Abschnitt versteift werden und gleichzeitig in dem angrenzenden Abstandsabschnitt eine Elastizität aufweisen, die dann als Loslager dienen kann, um die Flächenelemente flexibel befestigen oder tragen zu können.

Der Abstandsabschnitt und der Befestigungsabschnitt können hierbei unterschiedliche Längen aufweisen, wodurch die Befestigungsbügel in ihrer Höhe variieren können und eine unterschiedliche Anzahl an Versteifungsprofilen umgreifen oder umschließen können. Ebenso können zum Beispiel zwei Abstandsabschnitte, an einem Befestigungsabschnitt angeordnet sein. Dies ermöglicht dann die Befestigung von zwei Flächenelementen an einem Befestigungsbügel, bevorzugt bei einer Ost-West-Anordnung der Flächenelemente. Der Abstandsabschnitt kann weiterhin, an seinem der Bodenkontaktplatte abgewendeten Ende, verschiedene Ausführungen zur Anordnung an einem Flächenelement aufweisen. Alternativ zu einer monolithischen Ausführung sind weitere Ausführungen, zum Beispiel eine Verbindung des Befestigungs- und Abstandsabschnitt durch löten oder schrauben, möglich, wobei die monolithische Ausführung als besonders stabile und langlebige Ausführung bevorzugt ist. Durch die Verwendung von wenigstens teilweise elastischem Material, kann besonders vorteilhaft eine Flexibilität des Befestigungsbügels erreicht werden, welche den Befestigungsbügel resistent gegenüber thermisch bedingten Verformungen macht und bei der Montage wenigstens teilweise Anpassungen der Ausrichtung des Befestigungsbügels und damit auch eine Justage der Flächenelemente zulässt.

Gemäß einer weiteren vorteilhaften Ausführungsform kann vorgesehen sein, dass das Bodenkontaktelement eine Befestigungsöffnung, insbesondere ein Langloch, aufweist, über das das Bodenkontaktelement mit einem Untergrund verbunden, bevorzugt verschraubt werden kann.

Hierdurch kann das Bodenkontaktelement besonders vorteilhaft an einer Dachkonstruktion angebracht werden oder zum Beispiel mit einer im Boden versenkten oder versenkbaren Ankereinheit verbunden werden. Die Ausführung als Langloch ermöglicht hierbei Anpassungen der Positionierung des Bodenkontaktelements, insbesondere entlang der Längsausrichtung des Langlochs. Das Bodenkontaktelement kann neben dem Langloch weitere Lochungen umfassen, welche ebenfalls lang oder punktförmig ausgebildet sein können und weitere Möglichkeiten zu Verankerung am Untergrund oder zum Abfluss von Staunässe bereitstellen können.

Gemäß einer weiteren vorteilhaften Ausführungsform kann vorgesehen sein, dass das Bodenkontaktelement in Längsrichtung eine Erstreckung von wenigstens 700mm, bevorzugt zwischen 750mm und 900mm, aufweist.

Diese Dimensionen haben sich als besonders vorteilhaft herausgestellt, um schon durch die reine Anlage des Bodenkontaktelements eine stabile Haftung am Untergrund zu erzeugen. Weiterhin ist diese Länge besonders gut kompatibel mit üblichen Dimensionen von Flächenelementen, wobei das Bodenkontaktelement weit genug unter das Flächenelement hineinragt um eine stabile Auflage, bevorzugt eine echte ¼-Klemmung an der Längskante, zu ermöglichen und ein Absinken des Flächenelements in seiner Mitte oder eine zu große Beanspruchung durch Windlasten zu verhindern, insbesondere wenn die Flächenelemente an Ihrer Längsseite kontaktiert oder gehalten werden.

Gemäß einer weiteren vorteilhaften Ausführungsform kann vorgesehen sein, dass das Bodenkontaktelement an den Rändern in einer Breitenrichtung sich in Längsrichtung erstreckende Randsicken aufweist, die den Rand mechanisch verstärken und/oder eine sichere Auflage von Ballastgewichten mit regelmäßiger, insbesondere ebener, Unterseite ermöglichen.

Durch die Randsicken wird eine bevorzugt wenigstens annähernd höhengleiche Ebene für die Auflage von Ballast geschaffen, wodurch insbesondere die Auflage von Ballast mit ebener bzw. flächiger Unterseite begünstigt wird. Gleichzeitig wird die Bodenkontaktplatte in ihrem Randbereich mechanisch verstärkt, wodurch insbesondere ein Brechen des Randes und damit einhergehender Verlust von Ballastmitteln verhindert wird. Das Bodenkontaktelement kann zusätzlich zu den Randsicken weitere Ein- und/oder Ausformungen aufweisen, welche am Rand oder abseits des Rands angeordnet sein können und die mechanische Stabilität des Bodenkontaktelements weiter verbessern können.

Gemäß einer weiteren vorteilhaften Ausführungsform kann vorgesehen sein, dass das Bodenkontaktelement auf einer Unterseite, wenigstens abschnittsweise in Bereichen, die mit einem Untergrund in Kontakt kommen eine reibungserhöhende Beschichtung, bevorzugt aus einem teilelastischen Material, aufweist.

Hierdurch kann die positionstreue Fixierung des Bodenkontaktelements weiter verbessert werden und besonders wenn keine tiefe Verankerung der Bodenkontaktplatte möglich ist, zum Beispiel bedingt durch die Dachkonstruktion oder Bodenzusammensetzung, zusätzliche Stabilität durch Oberflächenhaftung erreicht werden. Die Beschichtung kann zum Beispiel auf Basis von Kautschuk aus EPDM oder SBR gebildet werden, wobei andere Materialen ebenfalls denkbar sind. Alternativ oder zusätzlich zu einer reibungserhöhenden Beschichtung ist auch denkbar, dass die Unterseite des Bodenkontaktelements Ausformungen, wie zum Beispiel Nägel oder Zapfen, aufweist und/oder aufgeraut ist um die Reibung weiter zu erhöhen.

Weiterhin wird die oben genannte Aufgabe durch ein Montagesystem, umfassend wenigstens eine Montagevorrichtung gemäß einer der vorangehend beschriebenen Ausführungsformen, gelöst, wobei das Montagesystem wenigstens einen zweiten, wahlweise mit dem Bodenkontaktelement verbindbaren, Befestigungsbügel aufweist, wobei der zweite Befestigungsbügel sich in seiner Erstreckung in Höhenrichtung, insbesondere bezogen auf den Abstandsabschnitt, und/oder in einer Längenrichtung, insbesondere bezogen auf den Befestigungsabschnitt, von dem ersten Befestigungsbügel unterscheidet.

Zur Vermeidung unnötiger Wiederholungen wird im Hinblick auf die vorteilhaften Wirkungen sowie die vorteilhaften Ausführungen des Montagesystems auf die oben beschriebene Montagevorrichtung verwiesen.

Zusammengefasst ermöglicht das erfindungsgemäße Montagesystem, die Kombination von wenigstens zwei Befestigungsbügeln an einer oder mehreren Montagevorrichtungen bei der ein Bodenkontaktelement und Befestigungsbügel voneinander lösbar ausgeführt sind und werkzeuglos verbunden werden können, wodurch die Montage und gegebenenfalls Anpassungen maßgeblich vereinfacht werden.

Die wenigstens zwei Befestigungsbügel können sich hierbei besonders in der Höhe ihrer Abstandsabschnitte unterscheiden, wodurch vorteilhaft eine gestufte Anordnung eines Flächenelements möglich ist, wobei eine geneigte Anordnung, zum Beispiel für eine vorteilhafte Ausrichtung eines Photovoltaikmoduls, ermöglicht wird. Weiterhin können sich die Befestigungsbügel zusätzlich oder alternativ in der Länge ihres Befestigungsabschnitts unterscheiden oder sich einen Befestigungsabschnitt teilen. Hierdurch kann zum Beispiel bei einem Befestigungsbügel mit längerem Abstandsabschnitt ein stabiler Halt durch einen ebenfalls verlängerten Befestigungsabschnitt gewährleistet werden.

Das erfindungsgemäße Montagesystem kann zudem besonders vorteilhaft eine Alpinstütze umfassen, die zusätzlich zu den Montagevorrichtungen die Flächenelemente stütz. Dadurch können die Montagevorrichtungen auf Windlasten ausgelegt werden und etwaige höher ausfallende Schneelasten können durch die vorteilhaften Alpinstützen aufgenommen werden.

Nachfolgend wird die vorliegende Erfindung anhand von lediglich schematischen, beispielhafte Ausführungsformen der Erfindung zeigenden Zeichnungen näher erläutert.
Fig. 1 Eine perspektivische Ansicht einer erfindungsgemäßen Montagevorrichtung in einer ersten Ausführungsform
Fig. 2a Eine erste perspektivische Ansicht eines erfindungsgemäßen Bodenkontaktelements in einer ersten Ausführungsform
Fig. 2b Eine zweite perspektivische Ansicht, eines erfindungsgemäßen Bodenkontaktelements in einer ersten Ausführungsform
Fig. 3 Eine perspektivische Ansicht eines erfindungsgemäßen Befestigungsbügels in einer ersten Ausführungsform
Fig. 4 Eine perspektivische Seitenansicht einer erfindungsgemäßen Montagevorrichtung in einer zweiten Ausführungsform
Fig. 5 Eine perspektivische Ansicht eines erfindungsgemäßen Montagesystems in einer ersten Ausführungsform

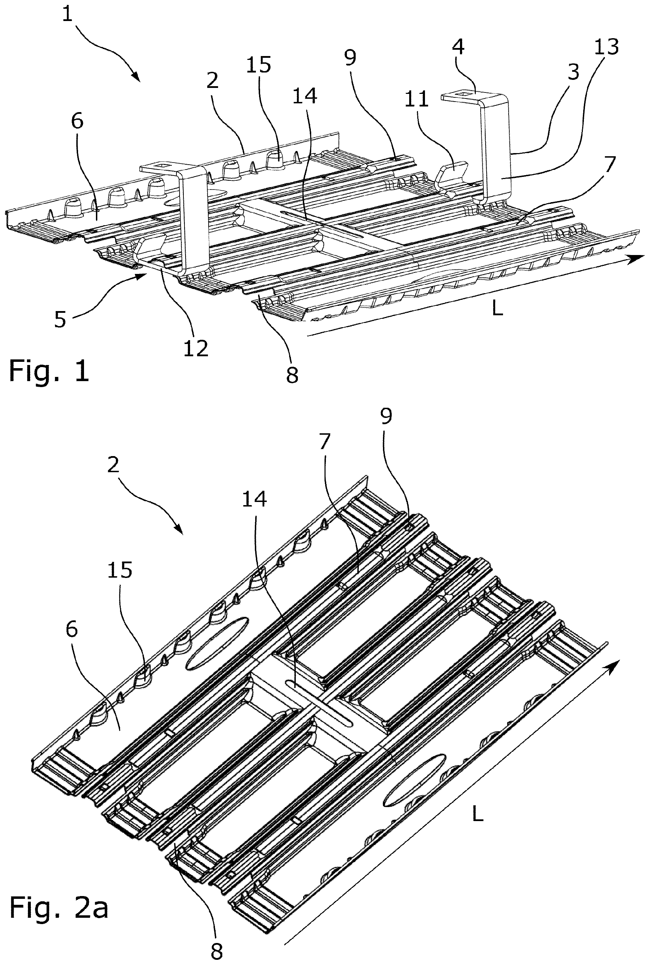

In der Fig. 1 ist eine erste Ausführungsform einer erfindungsgemäßen Montagevorrichtung 1 gezeigt, umfassend ein als Strukturplatte 6 ausgebildetes Bodenkontaktelement 2. Die Strukturplatte 6 weist hierbei Versteifungsprofile 7 auf, welche die Strukturplatte 6, insbesondere mechanisch, stabilisieren, wobei die Anzahl der Versteifungsprofile 7 variieren kann. An den Versteifungsprofilen 7 ist ein Aufnahmeschlitz 8 angeordnet, welcher in dieser Darstellung durch alle Versteifungsprofile 7 verläuft, wobei andere Ausführungen, zum Beispiel ein nur über ein Versteifungsprofilen 7 angeordneter Aufnahmeschlitz 8, denkbar sind. Die Strukturplatte 6 umfasst weiterhin randseitige Randsicken 15, welche insbesondere in ihrer Höhe den Versteifungsprofilen 7 angeglichen ausgebildet sind, wodurch eine Ebene zur Auflage von Ballast durch die Randsicken 15 und die Versteifungsprofile 7 ausgebildet wird.

Die Strukturplatte 6 kann weiterhin bodenseitige, in der Darstellung nicht gezeigte, reibungserhöhende Beschichtung aufweisen. Durch eine entlang der Längsrichtung L ausgebildete Steckverbindung 5 sind an der Strukturplatte 6 Befestigungsbügel 3 befestigt, wobei an den Versteifungsprofilen 7 Sicherungszungen 9 ausgebildet sind, welche während dem werkzeuglosen Herstellen der Steckverbindung 5 durch wenigstens teilweise Verformung passierbar sind und bei Erreichen des Befestigungsbügels 3 einer definierten Endposition, in eine am Befestigungsbügel 3 angeordnete Aussparung 10, durch wenigstens annähernde Rückformung, einschnappen und somit eine Sicherungsposition einnehmen, wodurch die Befestigungsbügel 3 in einer Endposition fixiert werden und ein akustisches und/oder haptisches Signal das Erreichen dieser Endposition kommuniziert. Die Befestigungsbügel 3 umfassen einen Befestigungsabschnitt 12, zum Eingriff in das Bodenkontaktelement 2, insbesondere zum Umgreifen eines Versteifungsprofils 7, wobei der Befestigungsabschnitt 12, besonders bezüglich seiner Länge, verschieden ausgeführt sein kann, wodurch unterschiedliche Anzahlen von Versteifungsprofilen 7 umfasst werden können. Am Befestigungsabschnitt 12 ist weiterhin eine Lasche 11 angeordnet, welche ein Versteifungsprofil 7 wenigstens teilweise umfasst und somit ein Verrutschen des Befestigungsbügel 3 verhindert und als Positionierungshilfe das Einstecken des Befestigungsbügel 3 erleichtern kann. Anstelle einer Lasche 11 kann auch ein weiterer, gleichartig oder andersartig ausgeführter, insbesondere gespiegelter, Befestigungsbügel 3, am gleichen Befestigungsabschnitt 12 angeordnet sein. Der Abstandsabschnitt 13 ist bevorzugt monolithisch am Befestigungsabschnitt 12 ausgebildet und kann bezüglich seiner Höhe unterschiedlich ausgeführt sein, um zum Beispiel eine geneigte bzw. gestufte Anordnung von Flächenelementen 16 zu ermöglichen. Die Befestigungsmittel 4 sind am Abstandsabschnitt 13 an der von dem Bodenkontaktelement 2 abgewandten Seite angeordnet und können zum Beispiel als Klammer oder Steckverbindung ausgeführt sein.

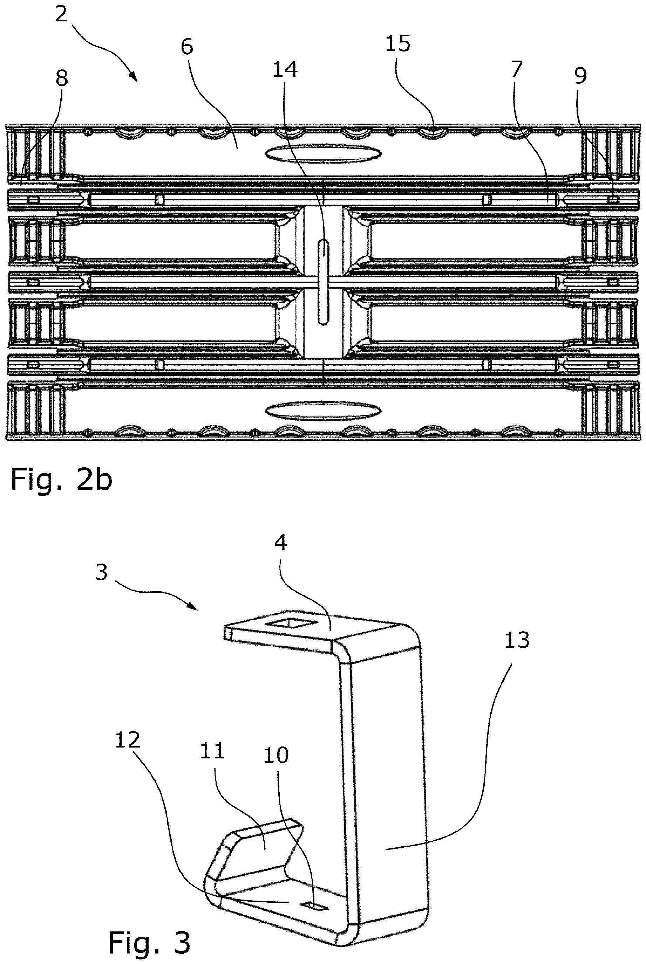

In der Fig. 2a und 2b wird ein erfindungsgemäßes Bodenkontaktelement 2 gezeigt, ausgebildet als Strukturplatte 6, umfassend Versteifungsprofile 7, welche die Strukturplatte 6 insbesondere mechanisch stabilisieren, wobei die Anzahl der Versteifungsprofile 7 variieren kann. Weiterhin umfasst die Strukturplatte 6 Randsicken 15, welche in ihrer Höhe wenigstens annähernd gleich angeordnet sind wie die Versteifungsprofile 7, wodurch insgesamt eine Ebene zum Beispiel für die Auflage von Ballast gebildet wird. Ebenso stabilisieren die Randsicken 15 den Rand mechanisch, insbesondere gegen ein Brechen oder Verformung, welche zu einem Verlust des Ballasts und damit der Sicherung der Montagevorrichtung führen können. An den Versteifungsprofilen 7 ist ein Aufnahmeschlitz 8 angeordnet, welcher zur Ausbildung einer Steckverbindung 5 mit einem Befestigungsbügel 3 ausgebildet ist. Weiterhin umfassen die Versteifungsprofile 7 Sicherungszungen 9, welche mit einer Aussparung 10 am Befestigungsbügel 3 zusammenwirken, um eine Erreichen einer Endposition des Befestigungsbügels 3 zu kommunizieren und diese zu fixieren. Die Strukturplatte 6 kann optional eine bodenseitige Beschichtung, zum Beispiel aus EPDM, umfassen um die Reibung gegenüber dem Untergrund zu erhöhen und die Strukturplatte positionstreu zu fixieren. Die Strukturplatte kann neben den Randsicken 15 und Versteifungsprofilen 7 weitere Ein- und/oder Ausformungen aufweisen, welche zum Beispiel die mechanische Stabilität weiter verbessern. Weiterhin umfasst die Strukturplatte 6 ein Langloch 14, zum Beispiel zur Verbindung mit einer im Boden versenkten oder versenkbaren Ankereinheit, wobei durch die längliche Ausführung Anpassungen entlang der Längsrichtung möglich sind. Die Strukturplatte 6 kann optional neben dem Langloch 14 weitere Lochungen aufweisen.

In der Fig. 3 wird beispielhaft ein erfindungsgemäßer Befestigungsbügel 3 gezeigt, welcher einen Befestigungsabschnitt 12 umfasst, zum Eingriff in das Bodenkontaktelement 2 und insbesondere zum Umgreifen eines Versteifungsprofils 7, wobei der Befestigungsabschnitt 12, besonders bezüglich seiner Länge, verschieden ausgeführt sein kann, wodurch unterschiedliche Anzahlen von Versteifungsprofilen 7 umfasst werden können. Außerdem ist am Befestigungsabschnitt bevorzugt wenigstens eine Aussparung 10 angeordnet, weiter bevorzugt eine Anzahl von Aussparungen 10, welche insbesondere der Anzahl umfasster Versteifungsprofilen 7 entspricht, die dazu ausgebildet ist, mit einer am Versteifungsprofil 7 angeordneten Sicherungszunge 9 zusammenzuwirken, um den Befestigungsbügel in einer Endposition der Steckverbindung 5 zu fixieren und das Erreichen dieser insbesondere akustisch zu kommunizieren. Am Befestigungsabschnitt 12 ist weiterhin eine Lasche 11 angeordnet, welche ein Versteifungsprofil 7 wenigstens teilweise umfasst und somit ein Verrutschen des Befestigungsbügels 3 verhindert und als Positionierungshilfe das Einstecken des Befestigungsbügel 3 erleichtern kann. Anstelle einer Lasche 11 kann auch ein weiterer, gleichartig oder andersartig ausgeführter, insbesondere gespiegelter, Befestigungsbügel 3, am gleichen Befestigungsabschnitt 12 angeordnet sein. Der Abstandsabschnitt 13 ist bevorzugt monolithisch am Befestigungsabschnitt 12 ausgebildet und kann bezüglich seiner Höhe unterschiedlich ausgeführt sein, um zum Beispiel eine geneigte bzw. gestufte Anordnung von Flächenelementen 16 zu ermöglichen. Die Befestigungsmittel 4 sind am Abstandsabschnitt 13 an der von dem Bodenkontaktelement 2 abgewandten Seite angeordnet und können zum Beispiel als Klammer oder Steckverbindung ausgeführt sein. Der Befestigungsbügel 3 ist bevorzugt aus wenigstens teilweise elastisch verformbaren Material gefertigt, bevorzugt aus Aluminium, wodurch der Befestigungsbügel besonders resistent gegen thermisches Verformen ist und während der Montage wenigstens teilweise durch Verformung angepasst werden kann.

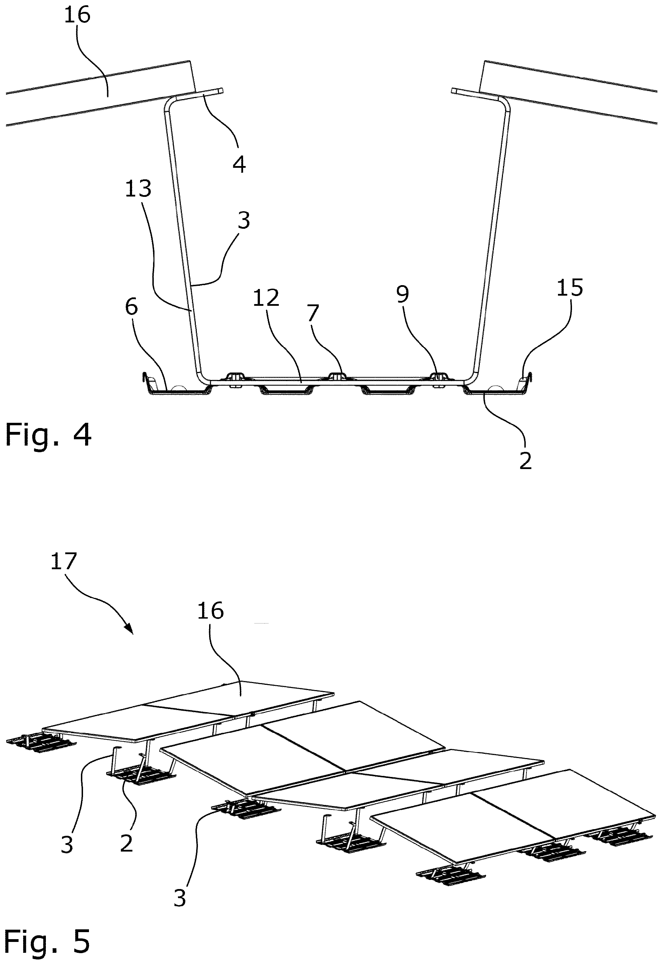

In der Fig. 4 wird eine Montagevorrichtung in einer zweiten Ausführungsform gezeigt, umfassend ein als Strukturplatte 6 ausgebildetes Bodenkontaktelement 2. Die Strukturplatte 2 weist hierbei Versteifungsprofile 7 auf, welche die Strukturplatte 6 insbesondere mechanisch stabilisieren, wobei die Anzahl der Versteifungsprofile 7 variieren kann. An den Versteifungsprofilen 7 sind Sicherungszungen 9 ausgebildet, welche dazu ausgebildet sind mit Aussparungen 10 am Befestigungsbügel 3 zusammenzuwirken, um diesen in einer Endposition zu fixieren und das Erreichen der Endposition durch ein akustisches und/oder haptisches Signal zu kommunizieren. Die Strukturplatte 6 umfasst weiterhin randseitige Randsicken 15, welche insbesondere in ihrer Höhe den Versteifungsprofilen 7 angeglichen ausgebildet sind, wodurch eine Ebene zur Auflage von Ballast durch die Randsicken 15 und die Versteifungsprofile 7 ausgebildet wird. Der Befestigungsbügel 3 umfasst einen Befestigungsabschnitt 12, zum Eingriff in das Bodenkontaktelement 2 und insbesondere zum Umgreifen eines Versteifungsprofils 7, wobei der Befestigungsabschnitt 12, besonders bezüglich seiner Länge, verschieden ausgeführt sein kann, wodurch unterschiedliche Anzahlen von Versteifungsprofilen 7 umfasst werden können. In dieser Ausführungsform sind am Befestigungsabschnitt 12 zwei Abstandsabschnitte 13 angeordnet, mit jeweils einem Befestigungsmittel 4 zur Anlage an einem Flächenelement 16. Die Abstandsabschnitte können in ihrer Länge gleichartig oder andersartig ausgebildet sein um eine gestufte Anordnung zu ermöglichen.

In der Fig. 5 wird ein erfindungsgemäßes Montagesystem 17 gezeigt, welches mehrere Montagevorrichtungen 1 umfasst. Die Montagevorrichtungen 1 umfassen dabei jeweils ein Bodenkontaktelement 2, welches als Strukturplatte 6 ausgebildet ist. Weiterhin umfassen die Montagevorrichtungen 1 Befestigungsbügel 3, welche innerhalb einer Montagevorrichtung 1 gleichartig oder andersartig ausgebildet sein können, sowie innerhalb eines Montagesystems 17 gleichartig oder andersartig ausgebildet sein können. Die Darstellung zeigt eine Anordnung der Flächenelemente 16 in einer Ausrichtung, bei der eine Längsseite mit den Befestigungsbügeln 3 verbunden, insbesondere geklemmt wird. Anhand der Ausbildung des Bodenkontaktelements 2 als längliche Strukturplatte 6 können die Abstände der Befestigungsorte entlang der Längsseiten der Flächenelemente 16 verkürzt werden, was besonders die mechanische Stabilität und die Widerstandskraft gegen Windlasten verbessert. Dazu kann das Bodenkontaktelement 2 bevorzugt eine Länge von wenigstens 700mm aufweisen.

### Bezugszeichenliste

- 1: Montagevorrichtung
- 2: Bodenkontaktelement
- 3: Befestigungsbügel
- 4: Befestigungsmittel
- 5: Steckverbindung
- 6: Strukturplatte
- 7: Versteifungsprofil
- 8: Aufnahmeschlitz
- 9: Sicherungszunge
- 10: Aussparung
- 11: Lasche
- 12: Befestigungsabschnitt
- 13: Abstandsabschnitt
- 14: Befestigungsöffnung
- 15: Randsicken
- 16: Flächenelement
- 17: Montagesystem
- L: Längsrichtung

## Patentansprüche

1. Montagevorrichtung, insbesondere Flachdach- oder Freiflächenmontagesystem, für Flächenelemente, bevorzugt Photovoltaik- oder Solarthermiemodule, mit einem Bodenkontaktelement, welches bevorzugt auch zur Aufnahme von Ballastgewichten dient, **gekennzeichnet durch**
einen mit dem Bodenkontaktelement verbindbaren Befestigungsbügel, der an einem vom Bodenkontaktelement abgewandten Ende Befestigungsmittel, insbesondere Klammern, zur Befestigung der Flächenelemente umfasst oder aufnehmen kann, wobei die Verbindung zwischen dem Bodenkontaktelement und dem Befestigungsbügel lösbar ausgebildet ist.

2. Montagevorrichtung nach Anspruch 1,
**dadurch gekennzeichnet,**
**dass** die Verbindung zwischen dem Bodenkontaktelement und dem Befestigungsbügel werkzeuglos herstellbar und, bevorzugt werkzeuglos, lösbar ist.

3. Montagevorrichtung nach Anspruch 1 oder 2,
**dadurch gekennzeichnet,**
**dass** die Verbindung zwischen dem Bodenkontaktelement und den Befestigungsbügeln als Steckverbindung ausgebildet ist.

4. Montagevorrichtung nach Anspruch 3,
**dadurch gekennzeichnet,**
**dass** die Steckverbindung so ausgeführt ist, dass eine Einsteckrichtung im Wesentlichen parallel zu einer Grundebene, bevorzugt parallel zu einer Längsrichtung, des Bodenkontaktelements verläuft.

5. Montagevorrichtung nach einem der vorhergehenden Ansprüche,
**dadurch gekennzeichnet,**
**dass** das Bodenkontaktelement als Strukturplatte ausgebildet ist, bevorzugt mit wenigstens einem sich entlang einer Längsrichtung erstreckenden Versteifungsprofil.

6. Montagevorrichtung nach einem der vorhergehenden Ansprüche,
**dadurch gekennzeichnet,**
**dass** Bodenkontaktelement an zwei in Längsrichtung gegenüberliegenden Enden einen Aufnahmeschlitz zur Aufnahme der Befestigungsbügel aufweist.

7. Montagevorrichtung nach Anspruch 6,
**dadurch gekennzeichnet,**
**dass** sich der Aufnahmeschlitz über zwei, bevorzugt drei, Versteifungsprofile erstreckt.

8. Montagevorrichtung nach Anspruch 6 oder 7,
**dadurch gekennzeichnet,**
**dass** das Bodenkontaktelement, insbesondere im Bereich der Versteifungsprofile, eine in den Montageschlitz ragende Sicherungszunge aufweist, die beim Verbinden, insbesondere Aufstecken eines Befestigungsbügels passierbar ist und bei oder unmittelbar vor dem Erreichen der Endposition eines Befestigungsbügels selbsttätig in eine Sicherungsposition überführbar ist.

9. Montagevorrichtung nach einem der vorhergehenden Ansprüche,
**dadurch gekennzeichnet,**
**dass** der Befestigungsbügel an einem mit dem Bodenkontaktplatte verbundenen oder verbindbaren Ende eine ein Versteifungsprofil wenigstens abschnittweise umgreifende Lasche aufweist.

10. Montagevorrichtung nach einem der vorhergehenden Ansprüche,
**dadurch gekennzeichnet,**
**dass** der Befestigungsbügel einen Befestigungsabschnitt zum Eingriff in das Bodenkontaktelement, und insbesondere zum Umgreifen eines Versteifungsprofils, und einen an den Befestigungsabschnitt angrenzenden, bevorzugt monolithisch mit diesem verbundenen Abstandsabschnitt aufweist, wobei der Abstandsabschnitt aus einem wenigstens teilweise elastisch verformbaren Material, bevorzugt Aluminium, gefertigt ist.

11. Montagevorrichtung nach einem der vorhergehenden Ansprüche,
**dadurch gekennzeichnet,**
**dass** das Bodenkontaktelement eine Befestigungsöffnung, insbesondere ein Langloch, aufweist, über das das Bodenkontaktelement mit einem Untergrund verbunden, bevorzugt verschraubt werden kann.

12. Montagevorrichtung nach einem der vorhergehenden Ansprüche,
**dadurch gekennzeichnet,**
**dass** das Bodenkontaktelement in Längsrichtung eine Erstreckung von wenigstens 700mm, bevorzugt zwischen 750mm und 900mm, aufweist.

13. Montagevorrichtung nach einem der vorhergehenden Ansprüche,
**dadurch gekennzeichnet,**
**dass** das Bodenkontaktelement an den Rändern in einer Breitenrichtung sich in Längsrichtung erstreckende Randsicken aufweist, die den Rand mechanisch verstärken und/oder eine sichere Auflage von Ballastgewichten mit regelmäßiger, insbesondere ebener, Unterseite ermöglichen.

14. Montagevorrichtung nach einem der vorhergehenden Ansprüche,
**dadurch gekennzeichnet,**
**dass** das Bodenkontaktelement auf einer Unterseite, wenigstens abschnittsweise in Bereichen, die mit einem Untergrund in Kontakt kommen eine reibungserhöhende Beschichtung, bevorzugt aus einem teilelastischen Material, aufweist.

15. Montagesystem mit wenigstens einer Montagevorrichtung nach einem der Ansprüche 1 bis 12 und wenigstens einen zweiten, wahlweise mit einem Bodenkontaktelement verbindbaren, Befestigungsbügel, wobei der zweite Befestigungsbügel sich in seiner Erstreckung in Höhenrichtung, insbesondere bezogen auf den Abstandsabschnitt, und/oder in einer Längenrichtung, insbesondere bezogen auf den Befestigungsabschnitt, von dem ersten Befestigungsbügel unterscheidet.
